# EUROPÄISCHE PATENTANMELDUNG

(11) **EP 3 771 897 A1**
(43) Veröffentlichungstag der Anmeldung: **03.02.2021**
(21) Anmeldenummer: 19189631.5
(22) Anmeldetag: 01.08.2019
(51) Int. Cl.: G01N 15/06, H01T 19/04

(54) **SENSORSYSTEM, ABGASSYSTEM EINES FAHRZEUGS UND VERWENDUNG EINES SENSORSYSTEMS**

(71) Anmelder: Heraeus Nexensos GmbH, 63450 Hanau (DE)
(72) Erfinder: NICK, Christoph, Dr., 63450 Hanau (DE); ASMUS, Tim, Dr., 63450 Hanau (DE); PITZIUS, Peter, Dr., 63450 Hanau (DE); LAMMARCK, Christian, 63450 Hanau (DE); DIETMANN, Stefan, 63450 Hanau (DE); WIENAND, Karlheinz, Dr., 63450 Hanau (DE)
(74) Vertreter: Kilchert, Jochen

(57) **Zusammenfassung**

Die Erfindung betrifft ein Sensorsystem (1), umfassend mindestens eine Sensor-Einheit (2) und mindestens eine Ionisator-Einheit (3), die mindestens eine Hochspannungs-Elektrodenanordnung (31) aufweist. Erfindungsgemäß sind die Sensor-Einheit (2) und die Ionisator-Einheit (3) baulich voneinander getrennt und voneinander beabstandet ausgebildet.

## Beschreibung

Die Erfindung betrifft ein Sensorsystem, umfassend mindestens eine Sensor-Einheit und mindestens eine Ionisator-Einheit, die mindestens eine Hochspannungs-Elektrodenanordnung aufweist, gemäß Oberbegriff des Anspruches 1. Des Weiteren betrifft die Erfindung ein Abgassystem eines Fahrzeugs, umfassend ein erfindungsgemäßes Sensorsystem. Außerdem betrifft die Erfindung die Verwendung eines erfindungsgemäßen Sensorsystems in einem Abgassystem.

Im Stand der Technik sind Sensoren zur Partikeldetektion bekannt. In DE 102 44 702 A1 ist ein Sensor zur Detektion von Stoffen in einem Fluidstrom beschrieben, der zwei voneinander beabstandete Messelektroden umfasst, die dem zu untersuchenden Verbrennungsabgas ausgesetzt sind. Eine der Elektroden ist mit einer Hochspannungsquelle verbunden, so dass an den Messelektroden eine Spannung zwischen 1 kV und 10 kV anliegt.

Zwischen den Messelektroden kommt es zu dielektrisch behinderten Entladungen, wobei der zwischen den Messelektroden auftretende Strom mit der Anzahl der im Gasraum zwischen den Messelektroden vorhandenen Partikeln korreliert.

DE 10 2017 210 318 A1 beschreibt einen Rußsensor enthaltend eine Elektrodenspitze, die mit einem Dielektrikum beschichtet ist, um die Degradation der Spitze bei der Korona-Entladung zur Ionisation der Rußpartikel zu verlangsamen.

Aus dem Stand der Technik ist es außerdem bekannt, dass die Konzentration von leitfähigen Teilchen, beispielsweise Rußpartikeln in einem Abgas bestimmt werden kann, indem die durch Teilchenanlagerung hervorgerufenen Änderungen der elektrischen Eigenschaften von zwei oder mehreren kammartig ineinandergreifenden metallischen Elektroden gemessen werden. Derartige Elektroden werden auch als interdigitales Elektrodensystem bezeichnet.

Eine steigende Konzentration der sich auf der Sensoroberfläche anlagernden Teilchen führt zu einer Widerstands- bzw. Spannungsänderung zwischen den Elektroden. Bei einer konstant angelegten Spannung geht dies mit einer Änderung des Stromflusses einher. Zur Bestimmung der Teilchenkonzentration bzw. des Teilchenmassenstroms wird die Änderung des Stromes bzw. die Verringerung des Widerstandes des Elektrodensystems gemessen und mit der angelagerten Teilchenmasse korreliert.

Alternativ dazu kann die angelagerte Teilchenmasse auch durch die Definition eines Schwellwertes (Auslöseschwelle) und Messung einer Sammelzeit bis zum Erreichen dieses Schwellwertes bestimmt werden. Sensoren, die auf einem derartigen Prinzip beruhen, welches als sammelndes Prinzip einzuordnen ist, werden als resistive Partikelsensoren bezeichnet. Zur Regeneration des Sensorelements wird das Sensorelement bisher mit Hilfe einer Heizvorrichtung von den angelagerten Teilchen befreit.

In EP 2 426 477 A2 wird ein Teilchensensor bestehend aus einer IDK-Struktur (= interdigitale Kammelektroden-Struktur) mit Hochvolt-Elektroden, die über der IDK-Struktur positioniert sind, beschrieben. Die Hochvolt-Elektroden liegen auf gleichem Potenzial und erzeugen zusammen mit der unterhalb der IDK-Struktur gelegenen Gegenelektrode ein elektrisches Feld, um den Partikelstrom auf die IDK-Struktur zu lenken. Die Gegenelektrode funktioniert damit als Saugelektrode.

Die bekannten Rußsensoren weisen eine geringe Empfindlichkeit auf. Bei der Entwicklung solcher Sensoren besteht generell ein Zielkonflikt, da diese Sensoren in aggressiver Umgebung, beispielsweise im Abgasstrang eines Kraftfahrzeugs, eingesetzt werden und entsprechend geschützt und robust sein müssen. Andererseits ist eine möglichst hohe Messgenauigkeit gefordert.

Der Erfindung liegt die Aufgabe zu Grunde, ein Sensorelement der eingangs genannten Art dahingehend zu verbessern, dass dieser eine möglichst kurze Ansprechzeit, eine möglichst hohe Messgenauigkeit und eine möglichst lange Standzeit, beispielsweise im Abgasstrang eines Kraftfahrzeugs, aufweist.

Des Weiteren liegt der Erfindung die Aufgabe zu Grunde, ein Abgassystem mit einem erfindungsgemäßen Sensorsystem weiterzubilden. Außerdem liegt der Erfindung die Aufgabe zu Grunde, die Verwendung eines derartigen Sensorsystems anzugeben.

Erfindungsgemäß wird die Aufgabe durch ein Sensorsystem mit den Merkmalen des Patentanspruches 1 gelöst. Mit Blick auf das Abgassystem wird die Aufgabe erfindungsgemäß durch die Merkmale des Patentanspruches 12 gelöst. Mit Blick auf die Verwendung des Sensorsystems wird die Aufgabe erfindungsgemäß durch Patentanspruch 14 gelöst.

Konkret wird die Aufgabe durch ein Sensorsystem gelöst, das mindestens eine Sensor-Einheit und mindestens eine Ionisator-Einheit aufweist, wobei die Ionisator-Einheit mindestens eine Hochspannungs-Elektrodenanordnung aufweist. Erfindungsgemäß sind die Sensor-Einheit und die Ionisator-Einheit baulich voneinander getrennt und voneinander beabstandet ausgebildet.

Der Begriff "baulich voneinander getrennt und voneinander beabstandet ausgebildet" umfasst, dass die Sensor-Einheit und die Ionisator-Einheit selbstständige Einheiten bilden, wobei sich diese in einem räumlichen Abstand zueinander befinden, aber z.B. montiert in einem gemeinsamen Gehäuse oder auf einer gemeinsamen Schiene. Mit anderen Worten schließt die Formulierung "baulich voneinander getrennt und voneinander beabstandet ausgebildet" nicht aus, dass die beiden Einheiten in einem gemeinsamen Gehäuse oder auf einer gemeinsamen Schiene befindlich sind.

Aufgrund der Ausbildung von einander baulich getrennten Bauteilen bzw. Einheiten ist es möglich, sowohl die Sensor-Einheit als auch die Ionisator-Einheit getrennt voneinander herzustellen. Des Weiteren ist die Sensor-Empfindlichkeit eines derartigen Sensorsystems erhöht, so dass die Ansprechzeit des Sensorsystems entsprechend verringert ist.

Die Sensor-Einheit weist vorzugsweise ein Sensorelement auf, das wiederum eine Widerstandsmessstruktur, insbesondere eine IDK-Struktur, umfasst. Die Hochspannungs-Elektrodenanordnung ist als lonisator zur Erzeugung eines die zu detektierenden Partikel zumindest teilweise ionisierenden, elektrischen Feldes ausgebildet. Die Sensor-Einheit ist ein Bauteil, das direkt in der Messumgebung, beispielsweise im Abgasstrang eines Fahrzeugs eingesetzt wird und physikalisch in Wechselwirkung mit den zu messenden Größen, beispielsweise mit den zu detektierenden Rußpartikeln, tritt. Die Sensor-Einheit, insbesondere ein Sensorelement der Sensor-Einheit, fungiert als Messfühler, der mit einer Stromversorgung und zur Signalübertragung mit anderen Bauteilen verbunden wird.

Das Sensorsystem, insbesondere die Sensor-Einheit, ist insbesondere zur Detektion von Rußpartikeln, insbesondere im Abgasstrang eines Kraftfahrzeugs, geeignet. Andere Anwendungsmöglichkeiten sind möglich.

Da die Partikelmessung auf einer Widerstandsänderung der Widerstandsmessstruktur beruht, wird das Sensorelement der Sensor-Einheit als resistiver Sensor, insbesondere als resistiver Rußsensor, bezeichnet. Die Widerstandsmessstruktur weist mindestens zwei voneinander elektrisch isolierte Elektroden auf. Diese Elektroden werden als wenigstens zwei ineinander greifende kammartige Elektroden ausgebildet. In diesen ist eine elektrische Spannung von wenigen Volt angelegt. Entlang dem sich zwischen den Elektroden ausbreitenden Feld lagern sich geladene oder polarisierte Partikel an. Im Messbetrieb werden die beiden voneinander elektrische isolierten Elektroden durch die Ablagerung der Partikel überbrückt, so dass der Widerstand in der Widerstandsmessstruktur verändert wird.

Die Erfindung hat den Vorteil, dass das Sensorsystem robust ist und andererseits eine hohe Messgenauigkeit und Empfindlichkeit aufweist. Dieser Vorteil wird durch die Kombination der Widerstandsmessstruktur mit der als Ionisator-Einheit fungierenden Hochspannungs-Elektrodenanordnung erreicht.

Eine Hochspannungs-Elektrodenanordnung kann aus mindestens einer positiven Hochspannungs-Elektrode und mindestens einer negativen Hochspannungs-Elektrode gebildet sein, wobei die mindestens eine positive Hochspannungs-Elektrode von der mindestens einen negativen Hochspannungs-Elektrode elektrisch getrennt ist.

Die Hochspannungs-Elektrodenanordnung weist mindestens zwei Hochspannungs-Elektroden auf, die auf unterschiedlichem Potenzial liegen. Die Spannungen zwischen den mindestens zwei Hochspannungs-Elektroden können unipolar oder bipolar sein.

Des Weiteren ist es möglich, dass die mindestens eine positive Hochspannungs-Elektrode und/oder die mindestens eine negative Hochspannungs-Elektrode dreidimensional ausgestaltet ist/sind.

Als dreidimensionale Ausgestaltung einer Hochspannungs-Elektrode ist insbesondere eine derartige Form zu verstehen, die sich von einer flachen Elektrode unterscheidet. Vorzugsweise sind die positive Hochspannungs-Elektrode und die mindestens eine negative Hochspannungs-Elektrode gleichartig, d. h. mit der gleichen Form und Größe, ausgebildet. Dies erleichtert die Herstellung der Hochspannungs-Elektrodenanordnung.

In einer weiteren Ausführungsform der Erfindung ist es möglich, dass die mindestens eine positive Hochspannungs-Elektrode und/oder die mindestens eine negative Hochspannungs-Elektrode mindestens ein freies Ende aufweist, wobei das freie Ende vorzugsweise als eine Spitze ausgestaltet ist.

Beim Anlegen einer Hochspannung an die Hochspannungs-Elektrodenanordnung wird die Empfindlichkeit der Widerstandsmessstruktur erhöht. Aufgrund des durch die Hochspannungs-Elektrodenanordnung gebildeten elektrischen Feldes werden Gasmoleküle ionisiert, wobei die Gasmoleküle ihre Ladung auf die Partikel übertragen. Als Folge, so die Vorstellung, steigen die Anzahl bzw. die Konzentration der ionisierten Partikel beim Anlegen einer Hochspannung an. Die erhöhte Anzahl der ionisierten Partikel trägt dazu bei, dass die Ansprechzeit des Sensorsystems verkürzt wird.

Eine größere Zahl geladener Partikel beschleunigt die Ausbildung von Filamenten, insbesondere von Ruß-Filamenten, zwischen den mindestens zwei Elektroden der Widerstandsmessstruktur. Unter einem Filament ist eine Aneinanderreihung von Partikeln zu verstehen, ähnlich einer Perlenkette. Die Filamente bilden zwischen den mindestens zwei Elektroden Leiterbrücken und reduzieren den elektrischen Widerstand der Widerstandsmessstruktur des Sensorelements. Die Veränderung des elektrischen Widerstands lässt sich durch eine Strom-Spannungs-Messung einfach nachweisen.

Im Zusammenhang mit der Widerstandsmessstruktur hat der lonisator den Vorteil, dass dieser das Wachstum von Filamenten auf der Widerstandsmessstruktur fördert und somit die Empfindlichkeit und das Ansprechverhalten der Sensor-Einheit verbessert, ohne dass der Aufbau des Sensorsystems verkompliziert wird. Die Ionisator-Einheit selbst ist aufgrund von verwendeten Hochspannungs-Elektroden, die elektrisch voneinander isoliert sind, ebenfalls einfach aufgebaut.

Die mindestens eine positive Hochspannungs-Elektrode und/oder die mindestens eine negative Hochspannungs-Elektrode kann als gerader Draht oder gewinkelter Draht oder Stift oder Kegel oder Pyramide oder Obelisk oder Dorn ausgebildet sein. Vorzugsweise weisen die mindestens zwei Hochspannungs-Elektroden die gleiche Form auf.

Vorzugsweise sind die mindestens eine positive Hochspannungs-Elektrode und die mindestens eine negative Hochspannungs-Elektrode mit ihren freien Enden aufeinander zuweisend in einem ersten Abstand zueinander angeordnet. Der erste Abstand wird entlang einer Verbindungslinie zwischen den freien Enden der Hochspannungs-Elektroden definiert. Sofern die freien Enden als Spitzen ausgebildet sind, wird der Abstand entlang einer Verbindungslinie zwischen den beiden Spitzen der Hochspannungs-Elektroden definiert.

Der erste Abstand beträgt vorzugsweise 0,3 mm - 10 mm, insbesondere 1,0 mm - 5 mm. Mit anderen Worten beträgt die Länge der Verbindungslinie vorzugsweise 0,3 mm - 10 mm, insbesondere 1,0 mm - 5 mm.

Die baulich separate Anordnung der Hochspannungs-Elektrodenanordnung hat den Vorteil, dass in einem freien Raum zwischen den Hochspannungs-Elektroden ein elektrisches Feld entsteht, in dem Partikel und Gasmoleküle ionisiert werden können, um anschließend auf der Widerstandsmessstruktur der Sensor-Einheit nachgewiesen werden zu können.

Um möglichst viele geladene Partikel nachzuweisen, ist es von Vorteil, die Ionisator-Einheit, insbesondere die Hochspannungs-Elektrodenanordnung in Strömungsrichtung der Widerstandsmessstruktur vorzulagern. Die im elektrischen Feld ionisierten Partikel werden von der Gasströmung auf die Widerstandsmessstruktur der Sensor-Einheit transportiert.

Die baulich voneinander getrennte und beabstandete Ausbildung der Sensor-Einheit und der Ionisator-Einheit hat den Vorteil, dass die Ionisator-Einheit mit ausreichendem Abstand vor der Sensor-Einheit angeordnet bzw. positioniert werden kann, so dass eine Gasentladung zwischen der Hochspannungs-Elektrodenanordnung und der Widerstandsmessstruktur der Sensor-Einheit verhindert wird. Sofern der erste Abstand zwischen den freien Enden der Hochspannungs-Elektroden kleiner ist als ein zweiter Abstand, der zwischen der Hochspannungs-Elektrodenanordnung und der Widerstandsmessstruktur der Sensor-Einheit ausgebildet ist, ist das elektrische Feld zwischen den Enden der Hochspannungs-Elektroden am stärksten. Gleichzeitig werden Gasentladungen zur Widerstandsmessstruktur verhindert.

Der Anfang der Widerstandsmessstruktur, insbesondere der IDK-Struktur, in Strömungsrichtung weist einen zweiten Abstand zu den freien Enden, insbesondere zu den Spitzen, der Hochspannungs-Elektroden auf. Der zweite Abstand ist vorzugsweise größer als der erste Abstand, der entlang einer Verbindungslinie zwischen den freien Enden der Hochspannungs-Elektroden definiert ist. Mindestens eine Hochspannungs-Elektrode kann aus einem Draht gebildet sein. Eine derartige Ausführungsform ist besonders einfach in der Herstellung.

Vorzugsweise weist der Draht einer Hochspannungs-Elektrode einen Durchmesser von 0,01 mm - 3 mm, insbesondere von 0,02 mm - 1 mm, insbesondere von 0,03 mm - 0,6 mm, auf.

Aufgrund der baulichen Trennung zwischen der Sensor-Einheit und der Ionisator-Einheit kann die Ionisator-Einheit in einem wahlweise großen Abstand zur Sensor-Einheit angeordnet sein. Die Anordnung der Ionisator-Einheit ist hierbei nicht auf bauliche Vorgaben, wie diese aufgrund eines zusammenhängenden Bauteils notwendig wären, eingeschränkt.

In einer weiteren möglichen Ausführung der Erfindung kann die Hochspannungs-Elektrodenanordnung mindestens einen Elektrodenverbund aufweisen. Der Elektrodenverbund kann dabei aus mindestens zwei positiven Hochspannungs-Elektroden oder mindestens zwei negativen Hochspannungs-Elektroden gebildet sein. Die mindestens zwei positiven Hochspannungs-Elektroden oder die mindestens zwei negativen Hochspannungs-Elektroden sind miteinander elektrisch verbunden. Mit anderen Worten kann mindestens ein Spannungspotenzial einer Hochspannungs-Elektrodenanordnung durch einen Elektrodenverbund, der aus einer Vielzahl von Hochspannungs-Elektroden gebildet ist, ausgebildet sein.

In einer besonders bevorzugten Ausführungsform der Erfindung kann die Hochspannungs-Elektrodenanordnung mindestens zwei Elektrodenverbünde mit unterschiedlicher Polung aufweisen.

Des Weiteren ist es möglich, dass die Hochspannungs-Elektrodenanordnung lediglich einen Elektrodenverbund sowie eine zusätzliche einzelne Hochspannungs-Elektrode aufweist. Der Elektrodenverbund weist dabei eine erste Polung, die einzelne Hochspannungs-Elektrode eine weitere Polung auf.

Mit Hilfe des erfindungsgemäßen Sensorsystems ist möglich, viele Partikel im vorbeiströmenden Gasfluss zu ionisieren. Je höher die Dichte der geladenen Partikel im Gasstrom ist, umso kürzer ist die Ansprechzeit des Sensors.

Um die Partikel zu ionisieren sind hohe Feldstärken erforderlich. Hohe Feldstärken können insbesondere an den freien Enden, insbesondere an den Spitzen, der Hochspannungs-Elektroden erzeugt werden. An den freien Enden, insbesondere an den Spitzen, ist die Dichte der Feldlinien besonders hoch. Um viele Partikel zu ionisieren, muss der Raum mit hoher Feldstärke möglichst groß sein. Besonders vorteilhaft ist es, einzelne Hochspannungs-Elektrodenpaare neben und/oder hintereinander zu positionieren.

Die Hochspannungs-Elektrodenpaare können dabei einzeln oder als Elektrodenverbünde angesteuert werden. Mindestens ein Elektrodenverbund kann als Kamm oder Krone oder Stern oder Bürste oder Ring ausgebildet sein. Die angegebene Form des Elektrodenverbundes ist insbesondere durch Anordnung von einzelnen Hochspannungs-Elektroden, die beispielsweise aus Elektrodendrähten gebildet werden, zu verstehen.

Bei der Anordnung von mehreren Elektroden neben und hintereinander kann von einer Bürstenform des Elektrodenverbundes ausgegangen werden.

Als Kamm ist dabei eine Anordnung von mehreren Hochspannungs-Elektroden zu verstehen, die nebeneinander angeordnet sind. Als ein Elektrodenverbund, der als Krone ausgebildet ist, ist insbesondere eine Anordnung mehrerer Hochspannungs-Elektroden zu verstehen, die auf einer gedachten Kreislinie angeordnet sind.

Eine sternförmige Ausbildung eines Elektrodenverbundes und/oder einer Hochspannungs-Elektrode sieht insbesondere eine sternförmige Elektrode, die mehrere Spitzen aufweist, vor.

Des Weiteren ist es möglich, dass eine Hochspannungs-Elektrode (positiv oder negativ) und/oder ein Elektrodenverbund als Ring ausgebildet ist. Insbesondere eine einzelne Hochspannungs-Elektrode (positiv oder negativ) kann als sogenannte Ringelektrode ausgebildet sein. Eine mögliche Ausbildung einer Hochspannungs-Elektrodenanordnung sieht eine erste flache sternförmige Hochspannungs-Elektrode vor, die mehrere Spitzen aufweist. Die sternförmige Hochspannungs-Elektrode (positiv oder negativ) befindet sich im Zentrum einer Ringelektrode (positiv oder negativ). Beide Hochspannungs-Elektroden sind elektrisch voneinander isoliert. Die beiden Elektroden sind vorzugsweise über mindestens einen Elektrodenhalter mit der Ionisator-Einheit verbunden bzw. bilden die Ionisator-Einheit. Die Halter können die Hochspannungs-Elektroden in einer Ionisator-Einheit fixieren. Die Halter können zusätzlich die elektrische Verbindung herstellen. Es ist möglich, dass eine als Ring ausgebildete Hochspannungs-Elektrode an ihrer Innenseite als Schneide ausgebildet ist.

Die Sensor-Einheit weist ein Sensorelement auf, das wiederum eine Widerstandsmessstruktur, insbesondere eine IDK-Struktur umfasst. In einer bevorzugten Ausführungsform der Erfindung weist die Sensor-Einheit ein Sensorelement auf, umfassend ein elektrisch isolierendes Substrat mit einer oberen und einer unteren Seite, wobei die obere Seite eine IDK-Struktur umfasst und die untere Seite mit einer Hülse verbunden ist.

Die Widerstandsmessstruktur weist mindestens zwei voneinander elektrisch isolierte Elektroden auf, insbesondere wenigstens zwei, kammartig ineinander greifende Elektroden, insbesondere metallische Elektroden. Wie bereits erläutert, wird ein derartiges Elektrodensystem auch als interdigitale Kammelektrode oder als Elektrodensystem mit IDK-Struktur bezeichnet.

Die IDK-Struktur weist vorzugsweise Dickschicht- oder Dünnschicht-Platin auf.

Da die Hochspannungs-Elektrodenanordnung in Strömungsvorrichtung vor der Sensor-Einheit, insbesondere vor der Widerstandsmessstruktur angeordnet ist, können die zu detektierenden Partikel im Messbetrieb zunächst die Hochspannungs-Elektrodenanordnung passieren, um anschließend in den Bereich der Sensor-Einheit, insbesondere der Widerstandsmessstruktur, zu gelangen. Dadurch wird bewirkt, dass die gesamte wirksame Fläche der Widerstandsmessstruktur für die erhöhte Anlagerung der Filamente durch den lonisator genutzt wird. Dies führt zu einer weiteren Verbesserung der Empfindlichkeit bzw. des Ansprechverhaltens des Sensors.

In einer Ausführungsform der Erfindung ist es möglich, dass die Widerstandsmessstruktur, insbesondere die IDK-Struktur, durch eine Passivierungsschicht geschützt ist. Dadurch wird bezweckt, dass die Widerstandsmessstruktur nicht von der aggressiven Umgebung, in der das Sensorsystem verwendet wird, angegriffen wird. Geeignete Passivierungsschichten umfassen zum Beispiel Metalloxide oder Glas oder Keramiken oder Glaskeramiken. Die Standzeit des Sensorsystems wird durch das Ausbilden einer Passivierungsschicht auf der Widerstandsmessstruktur, insbesondere auf der IDK-Struktur, verlängert.

Die freien Enden der Hochspannungs-Elektroden, insbesondere die Spitzen der Hochspannungs-Elektroden, weisen vorzugsweise eine dielektrische Beschichtung auf, um die Elektrodenspitzen gegen Korrosion, also gegen chemische und physikalische Alterung zu schützen. Geeignete Beschichtungen für die dielektrische Beschichtung umfassen z. B. Metalloxide oder Glas oder Keramik oder Glaskeramik. Die Standzeit des Sensorsystems wird mit einer derartigen dielektrischen Beschichtung verlängert.

Die angelegte Hochspannung, der erste Abstand zwischen den freien Enden der Hochspannungs-Elektroden und die Ausgestaltung der freien Enden, insbesondere der Spitzen, bestimmen die elektrische Feldstärke der Ionisator-Einheit.

Sofern die freien Enden der Hochspannungs-Elektroden als Spitzen ausgebildet sind, können diese Spitzen einen Krümmungsradius von 0,1 µm - 100 µm, insbesondere von 0,2 µm - 30 µm, insbesondere von 0,3 µm - 10 µm, aufweisen. Es hat sich gezeigt, dass die vorstehend genannten Draht-Geometrien zu besonders guten Ergebnissen hinsichtlich der Messgenauigkeit des Sensorsystems führen.

In einer möglichen Ausführungsform der Erfindung weist die Widerstandsmessstruktur, insbesondere die IDK-Struktur, zwei ineinander greifende Heizschleifen auf. Alternativ kann das mindestens eine Substrat des Sensorelement mindestens eine Heizschleife aufweisen. Die mindestens eine Heizschleife hat den Vorteil, dass die Sensor-Einheit im Betrieb gereinigt werden kann, um die Filamente und die Rußpartikel von der Widerstandsmessstruktur, insbesondere von der IDK-Struktur, in zeitlichen Abständen zu entfernen.

In einer weiteren Ausführungsform der Erfindung kann das Sensorsystem eine Saugelektrode aufweisen. Die Saugelektrode kann beispielsweise auf dem Substrat des Sensorelements ausgebildet sein. Eine derartige Saugelektrode verbessert die Empfindlichkeit des Sensorsystems. Aufgrund der Ausbildung einer Saugelektrode wird es ermöglicht, dass die Anzahl der auf die Widerstandsmessstruktur, insbesondere auf die IDK-Struktur, gelenkten Partikel erhöht wird.

Vorzugsweist ist die IDK-Struktur räumlich zwischen der Hochspannungs-Elektrodenanordnung und der mindestens einen Saugelektrode angeordnet, so dass die durch die Hochspannungs-Elektrodenanordnung ionisierten Partikel, insbesondere Rußpartikel, auf die Widerstandsmessvorrichtung, insbesondere auf die IDK-Struktur, gelenkt werden.

Auf dem Substrat des Sensorelements können weitere Komponenten, wie z. B. Temperatursensoren und/oder Heizer, angeordnet sein.

Ein weiterer Aspekt der Erfindung betrifft ein Abgassystem eines Fahrzeugs, wobei das Abgassystem ein erfindungsgemäßes Sensorsystem umfasst, wobei das Sensorsystem in einem Abgasstrang ausgebildet ist. Die mindestens eine Sensor-Einheit ist in Gasstrom-Richtung nach mindestens einer Hochspannungs-Elektrodenanordnung der Ionisator-Einheit angeordnet.

In einer weiteren Ausführungsform der Erfindung ist mindestens eine zwischen zwei freien Enden mindestens einer positiven Hochspannungs-Elektrode und mindestens einer negativen Hochspannungs-Elektrode ausgebildete Verbindungslinie senkrecht zur Gasstrom-Richtung angeordnet. Dies ermöglicht eine besonders gute Ionisierung der zu detektierenden Rußpartikel.

Ein weiterer Aspekt der Erfindung betrifft die Verwendung eines erfindungsgemäßen Sensorsystems in einem Abgassystem eines Fahrzeugs. Dabei werden zur Detektion von Partikeln, insbesondere von Rußpartikeln, in einem Gasstrom des Abgassystems ungeladene Partikel mittels der Ionisator-Einheit ionisiert, wobei geladene Partikel, d. h. ionisierte Partikel, anschließend von der Sensor-Einheit detektiert werden.

Zwischen der mindestens einen positiven Hochspannungs-Elektrode und der mindestens einen negativen Hochspannungs-Elektrode wird bei der Verwendung des Sensorsystems eine Hochspannung angelegt, die mindestens 50 Volt beträgt. In einer besonders bevorzugten Ausführungsform der Erfindung beträgt die Spannung an der Hochspannungs-Elektrodenanordnung 100 Volt - 10 Kilovolt. Bei der angelegten Spannung kann es sich um unipolare oder bipolare Gleichspannung oder Wechselspannung handeln. Das erfindungsgemäße Sensorsystem wird in einer besonders bevorzugten Ausführungsform der Erfindung in einem Abgasstrang eines Verbrennungsmotors verwendet, um die Konzentration der Rußpartikel im Abgas des Verbrennungsmotors zu messen.

Die Erfindung wird nachstehend anhand von Ausführungsbeispielen unter Bezug auf die beigefügten schematischen Zeichnungen mit weiteren Einzelheiten näher erläutert.

In diesen zeigen
- Fig. 1: eine schematische Darstellung eines erfindungsgemäßen Sensorsystems, wobei das erfindungsgemäße Sensorsystem in einem Abgasstrang eines Fahrzeugs angeordnet ist;
- Fig. 2a - 2c: unterschiedliche Ausführungsformen hinsichtlich einer Ionisator-Einheit;
- Fig. 3: eine schematische Darstellung einer Hochspannungs-Elektrodenanordnung mit ausgebildeten Spitzen;
- Fig. 4a - 4d: verschiedene Ausführungsformen von Elektrodenverbünden;
- Fig. 5a u. 5b: eine spezielle Ausführungsform hinsichtlich einer Hochspannungs-Elektrodenanordnung in einer Draufsicht sowie Seitenansicht; und
- Fig. 6a u. 6b: eine Darstellung einer Sensor-Einheit sowie eines Sensorelements.

In den nachfolgenden Figuren werden für gleiche und gleichwirkende Bauteile die gleichen Bezugsziffern verwendet.

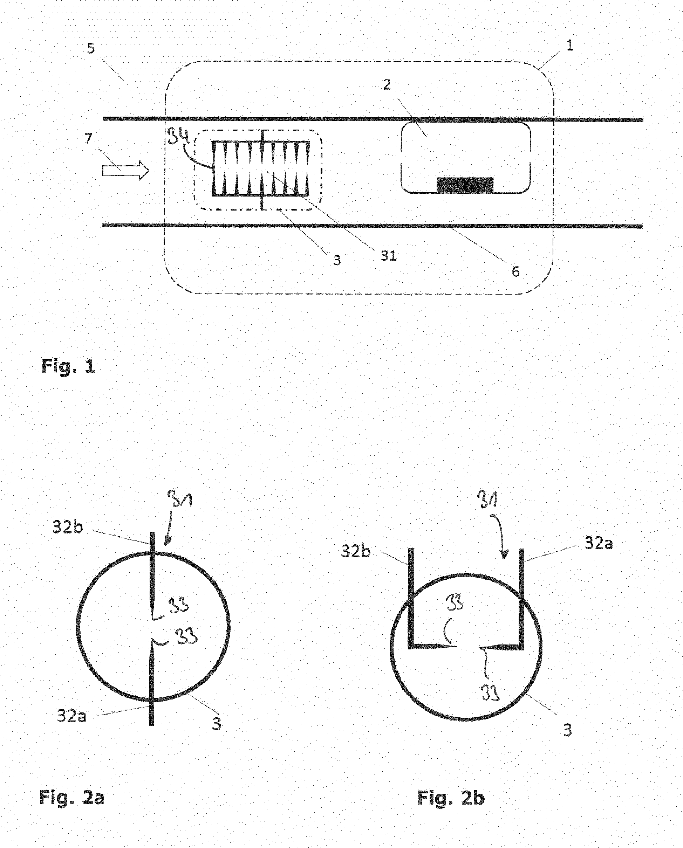

Fig. 1 zeigt ein Beispiel eines erfindungsgemäßen Sensorsystems 1, das zur Detektion elektrisch leitfähiger und/oder polarisierter Partikel in einem Abgassystem 5 eines Fahrzeugs verwendet wird. Das Sensorsystem 1 ist im Abgassystem 5, insbesondere im Abgasstrang 6 des Fahrzeugs eingebaut. Das Sensorsystem 1 umfasst im Wesentlichen die beiden Bauteile Sensor-Einheit 2 und Ionisator-Einheit 3.

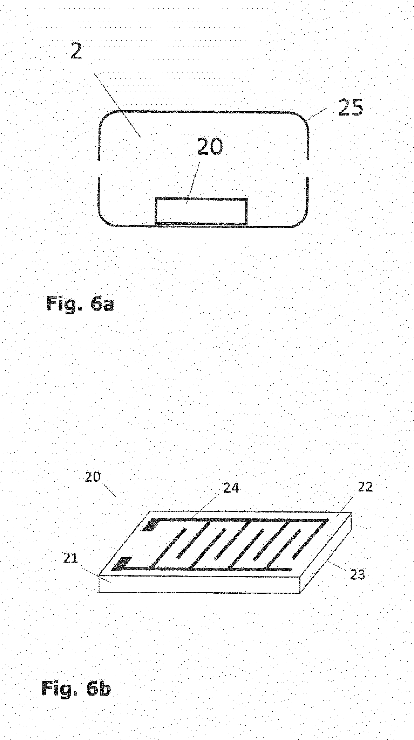

Die Sensor-Einheit 2 ist in den Fig. 6a und 6b detaillierter dargestellt.

Die Ionisator-Einheit 3 umfasst im Wesentlichen eine Hochspannungs-Elektrodenanordnung 31. In Fig. 1 ist die Gasstrom-Richtung 7 angedeutet. In Gasstrom-Richtung 7 ist zunächst die Ionisator-Einheit 3 angeordnet. Im weiteren Verlauf der Gasstrom-Richtung 7 ist anschließend die Sensor-Einheit 2 ausgebildet.

Sinn und Zweck des Sensorsystems 1 ist es, die Konzentration bzw. Anzahl der Rußpartikel in dem Abgasstrang 6 zu detektieren. Die Erfindung ist nicht auf die Messung von Rußpartikeln eingeschränkt, sondern kann auch für andere Anwendungsfälle eingesetzt werden, bei denen es auf die Detektion elektrisch leitfähiger und/oder polarisierter Partikel ankommt. Die Verwendung zur Messung der Rußpartikelkonzentration ist der bevorzugte Anwendungsfall.

Bei der Verwendung des Sensorsystems 1 in dem Abgassystem 5 werden ungeladene Partikel zunächst mittels der Ionisator-Einheit 3 ionisiert, wobei geladene Partikel anschließend von der Sensor-Einheit 2 detektiert werden. Im Zusammenhang mit der Hochspannungs-Elektrodenanordnung 31 ist insbesondere eine Hochspannung von mindestens 50 Volt angelegt.

In den Fig. 2a - 2c sind erste Ausführungsformen hinsichtlich der Ionisator-Einheit 3 angedeutet. In Fig. 2a umfasst die Ionisator-Einheit 3 eine Hochspannungs-Elektrodenanordnung, die aus einer positiven Hochspannungs-Elektrode 32a und einer negativen Hochspannungs-Elektrode 32b gebildet ist. Die beiden Hochspannungs-Elektroden 32a und 32b sind als gerade Drähte ausgebildet. Die freien Enden 33 der Hochspannungs-Elektroden 32a und 32b sind als Spitzen ausgebildet. Die Spitzen weisen in diesem Fall zueinander.

In Fig. 2b ist eine weitere Ausführungsform hinsichtlich einer Hochspannungs-Elektrodenanordnung 31 abgebildet. Auch in diesem Fall sind jeweils eine positive Hochspannungs-Elektrode 32a sowie ein negative Hochspannungs-Elektrode 32b ausgebildet. Die beiden Hochspannungs-Elektroden 32a und 32b sind als gewinkelte Drähte ausgebildet, wobei auch in diesem Fall die freien Enden 33 Spitzen aufweisen. Die Spitzen 33 weisen auch in diesem Fall zueinander.

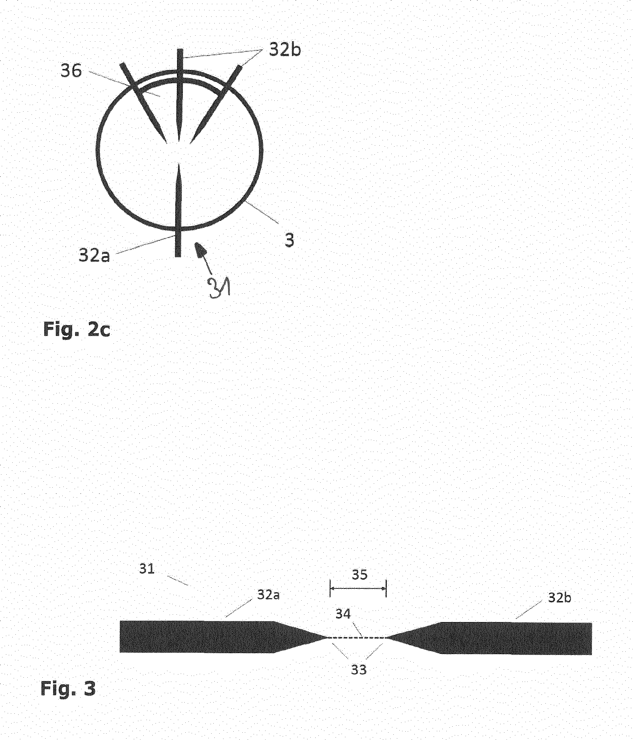

In Fig. 2c wird die Hochspannungs-Elektrodenanordnung 31 aus einer positiven Hochspannungs-Elektrode 32a sowie aus einem Elektrodenverbund 36 gebildet. Der Elektrodenverbund 36 besteht selbst wiederum aus drei elektrisch miteinander verbunden negativen Hochspannungs-Elektroden 32b. Die einzelnen Hochspannungs-Elektroden 32a und 32b sind aus geraden Drähten gebildet, die wiederum freie Enden aufweisen, die als Spitzen ausgebildet sind.

In Fig. 3 werden die freien Enden 33 der Hochspannungs-Elektroden 32a und 32b detaillierter dargestellt. Diese freien Enden 33 sind jeweils als Spitzen ausgebildet. Zwischen den Spitzen 33 der Hochspannungs-Elektroden 32a und 32b ist ein erster Abstand 35 ausgebildet. Der erste Abstand 35 wird entlang der Verbindungslinie 34 zwischen den freien Enden 33 definiert. Vorzugsweise ist die Ionisator-Einheit 3 derart im Abgasstrang 6 angeordnet bzw. ausgebildet, dass die Verbindungslinie 34 senkrecht zur Gasstrom-Richtung 7 angeordnet ist. Diesbezüglich ist eine Verbindungslinie 34 von mehreren ausgebildeten Verbindungslinien in Fig. 1 angedeutet. Bei der Ausbildung von Hochspannungs-Elektroden mit Spitzen an den freien Enden wird ein stärkeres elektrisches Feld hervorgerufen.

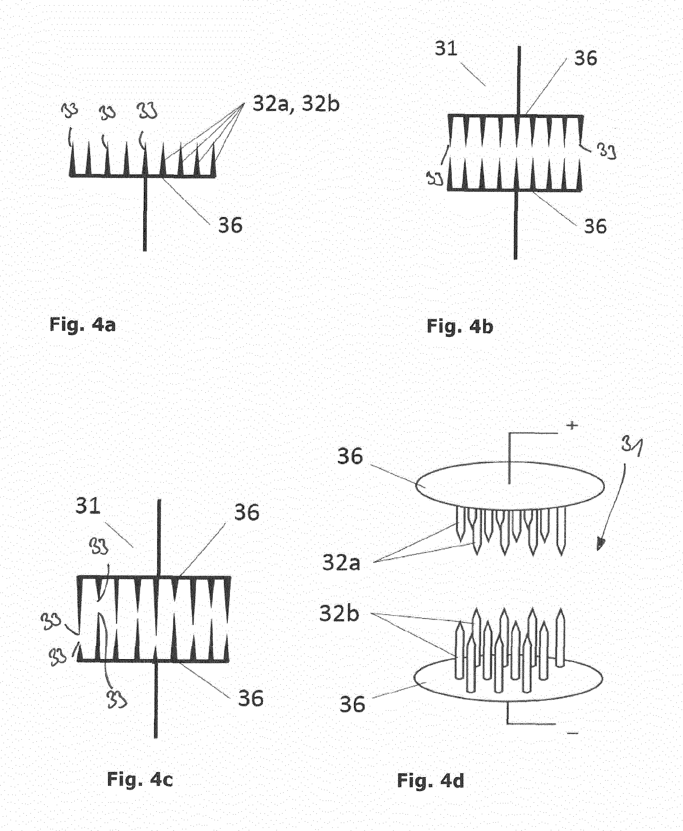

In den Fig. 4a - 4d sind unterschiedliche Ausführungsformen von Elektrodenverbünden 36 dargestellt. In Fig. 4a wird ein erster Elektrodenverbund 36 dargestellt. Dieser besteht aus neun elektrisch miteinander verbundenen Hochspannungs-Elektroden 32a oder 32b. Der dargestellte Elektrodenverbund 36 weist die Form eines Kamms auf. Alle Hochspannungs-Elektroden des Elektrodenverbundes 36 weisen Spitzen an den freien Enden 33 auf. Die freien Enden der Hochspannungs-Elektroden 32a, 32b sind in einer Ebene angeordnet.

Es ist möglich, dass der in Fig. 4a dargestellte Elektrodenverbund 36 zusammen mit einer gegenüberliegend ausgebildeten einzelnen Hochspannungs-Elektrode (32a oder 32b) eine Hochspannungs-Elektrodenanordnung bildet.

In Fig. 4b wird wiederum dargestellt, dass es möglich ist, eine Hochspannungs-Elektrodenanordnung 31 aus zwei kammartig ausgebildeten Elektrodenverbünden 36 zu bilden. Die freien Enden 33 der einzelnen Hochspannungs-Elektroden sind zueinander gegenüberliegend angeordnet. Zwischen den freien Enden 33 des jeweils gegenüberliegenden Elektrodenverbundes werden wiederum Verbindungslinien (hier nicht dargestellt) gebildet.

Die in Fig. 4b dargestellte Hochspannungs-Elektrodenanordnung entspricht der in Fig. 1 verwendeten Hochspannungs-Elektrodenanordnung 31.

Wie in Fig. 4c dargestellt ist, ist es in einer weiteren Ausführungsform der Erfindung möglich, dass die freien Enden 33 der einzelnen Elektrodenverbünde 36 nicht in einer Ebene angeordnet sind. Die Anordnung der Elektrodenverbünde 36 erfolgt wie in Fig. 4c dargestellt, derart, dass jeweils eine kurze Hochspannungs-Elektrode gegenüberliegend zu einer langen Hochspannungs-Elektrode ausgebildet ist.

Die in Fig. 4d dargestellte Hochspannungs-Elektrodenanordnung 31 entspricht in etwa der in Fig. 4c schematisch dargestellten Anordnung von Elektrodenverbünden 36. Die Elektrodenverbünde 36 sind jedoch nicht kammartig sondern bürstenartig ausgebildet.

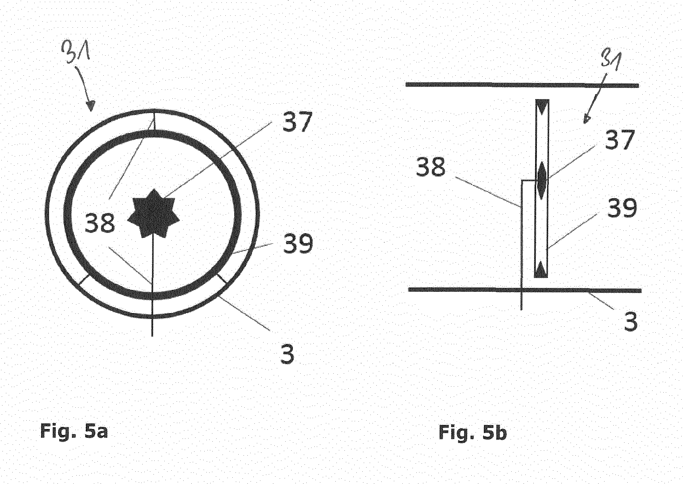

Die in den Fig. 5a (Draufsicht) und Fig. 5b (Seitenansicht) dargestellte Ionisator-Einheit 3 weist eine Hochspannungs-Elektrodenanordnung 31 auf. Diese weist eine flache, sternförmige Hochspannungs-Elektrode 37 auf, die mehrere Spitzen umfasst. Des Weiteren ist eine Hochspannungs-Elektrode dargestellt, die als Ringelektrode 39 ausgebildet ist. Die flache sternförmige Elektrode 37 ist im Zentrum der Ringelektrode 39 angeordnet. Beide Elektroden 37 und 39 sind elektrisch voneinander isoliert. Die beiden Elektroden 37 und 39 sind jeweils über mindestens einen Elektrodenhalter 38 mit der Ionisator-Einheit 3 verbunden. Die Elektrodenhalter 38 fixieren die Elektroden 37, 39 in der Ionisator-Einheit 3, können aber auch die elektrische Zuführung bilden. Die Ringelektrode 39 kann in einer möglichen Ausführungsform der Erfindung an ihrer Innenseite als Schneide ausgebildet sein.

In Fig. 6a wird schematisch eine Sensor-Einheit 2 dargestellt. Diese besteht im Wesentlichen aus einem Sensorelement 20, das in einer Hülse 25 befindlich ist. Wie in Fig. 6b detaillierter dargestellt ist, besteht das Sensorelement 20 aus einem elektrisch isolierenden Substrat 21. Das Substrat 21 weist wiederum eine obere Seite 22 und eine untere Seite 23 auf. Auf der oberen Seite 22 ist eine Widerstandsmessstruktur, insbesondere eine IDK-Struktur 24, ausgebildet. Die untere Seite 23 ist wiederum mit einer Hülse 25 verbunden. Auf dem Substrat 20 können noch weitere Bauteile, wie beispielsweise ein Temperatursensor und/oder ein Heizer ausgebildet sein.

### Bezugszeichenliste

- 1: Sensorsystem
- 2: Sensor-Einheit
- 3: Ionisator-Einheit
- 5: Abgassystem
- 6: Abgasstrang
- 7: Gasstrom-Richtung
- 20: Sensorelement
- 21: Substrat
- 22: obere Seite
- 23: untere Seite
- 24: IDK-Struktur
- 25: Hülse
- 31: Hochspannungs-Elektrodenanordnung
- 32a: positive Hochspannungs-Elektrode
- 32b: negative Hochspannungs-Elektrode
- 33: freies Ende
- 34: Verbindungslinie
- 35: erster Abstand
- 36: Elektrodenverbund (HV)
- 37: sternförmige Elektrode (HV)
- 38: Elektrodenhalter (HV)
- 39: Ringelektrode (HV)

## Patentansprüche

1. Sensorsystem (1), umfassend mindestens eine Sensor-Einheit (2) und mindestens eine Ionisator-Einheit (3), die mindestens eine Hochspannungs-Elektrodenanordnung (31) aufweist,
**dadurch gekennzeichnet, dass**
die Sensor-Einheit (2) und die Ionisator-Einheit (3) baulich voneinander getrennt und voneinander beabstandet ausgebildet sind.

2. Sensorsystem (1) nach Anspruch 1,
**dadurch gekennzeichnet, dass**
eine Hochspannungs-Elektrodenanordnung (31) aus mindestens einer positiven Hochspannungs-Elektrode (32a) und mindestens einer negativen Hochspannungs-Elektrode (32b) gebildet ist, wobei die mindestens eine positive Hochspannungs-Elektrode (32a) von der mindestens einen negativen Hochspannungs-Elektrode (32b) elektrisch getrennt ist.

3. Sensorsystem (1) nach Anspruch 2,
**dadurch gekennzeichnet, dass**
die mindestens eine positive Hochspannungs-Elektrode (32a) und/oder die mindestens eine negative Hochspannungs-Elektrode (32b) dreidimensional ausgestaltet ist/sind.

4. Sensorsystem (1) nach Anspruch 2 oder 3,
**dadurch gekennzeichnet, dass**
die mindestens eine positive Hochspannungs-Elektrode (32a) und/oder die mindestens eine negative Hochspannungs-Elektrode (32b) mindestens ein freies Ende (33) aufweist, wobei das freie Ende (33) vorzugsweise als eine Spitze ausgestaltet ist.

5. Sensorsystem (1) nach einem der Ansprüche 2 bis 4,
**dadurch gekennzeichnet, dass**
die mindestens eine positive Hochspannungs-Elektrode (32a) und/oder die mindestens eine negative Hochspannungs-Elektrode (32b) als gerader Draht oder gewinkelter Draht oder Stift oder Kegel oder Pyramide oder Obelisk oder Dorn ausgestaltet ist/sind.

6. Sensorsystem (1) nach einem der Ansprüche 2 bis 5,
**dadurch gekennzeichnet, dass**
die mindestens eine positive Hochspannungs-Elektrode (32a) und die mindestens eine negative Hochspannungs-Elektrode (32b) mit ihren freien Enden (33) aufeinander zuweisend in einem ersten Abstand (35) zueinander angeordnet sind, wobei der erste Abstand (35) entlang einer Verbindungslinie (34) zwischen den freien Enden (33) definiert ist.

7. Sensorsystem (1) nach Anspruch 6,
**dadurch gekennzeichnet, dass**
der erste Abstand (35) 0,3 mm bis 10 mm, insbesondere 1 mm bis 5 mm, beträgt.

8. Sensorsystem (1) nach einem der vorangegangenen Ansprüche,
**dadurch gekennzeichnet, dass**
die Hochspannungs-Elektrodenanordnung (31) mindestens einen Elektrodenverbund (36) aufweist, wobei der Elektrodenverbund (36) aus mindestens zwei positiven Hochspannungs-Elektroden (32a) oder mindestens zwei negativen Hochspannungs-Elektroden (32b) gebildet ist und die mindestens zwei positiven Hochspannungs-Elektroden (32a) oder die mindestens zwei negativen Hochspannungs-Elektroden (32b) miteinander elektrisch verbunden sind, wobei die Hochspannungs-Elektrodenanordnung (31) insbesondere mindestens zwei Elektrodenverbünde (36) mit unterschiedlicher Polung aufweist.

9. Sensorsystem (1) nach einem der Ansprüche 2 bis 8, insbesondere nach Anspruch 8"
**dadurch gekennzeichnet, dass**
mindestens eine Hochspannungs-Elektrode (32a, 32b) und/oder mindestens ein Elektrodenverbund (36) als Kamm oder Krone oder Stern oder Bürste oder Ring ausgebildet ist.

10. Sensorsystem (1) nach einem der vorangegangenen Ansprüche,
**dadurch gekennzeichnet, dass**
die Sensor-Einheit (2) ein Sensorelement (20) aufweist, umfassend ein elektrisch isolierendes Substrat (21) mit einer oberen (22) und einer unteren Seite (23), wobei die obere Seite (22) eine IDK-Struktur (24) umfasst und die untere Seite (23) mit einer Hülse (25) verbunden ist.

11. Sensorsystem (1) nach Anspruch 10,
**dadurch gekennzeichnet, dass**
die IDK-Struktur (24) Dick- oder Dünnschichtplatin aufweist.

12. Abgassystem (5) eines Fahrzeugs, umfassend ein Sensorsystem (1) nach einem der Ansprüche 1 bis 11, das in einem Abgasstrang (6) ausgebildet ist, wobei die mindestens eine Sensor-Einheit (2) in Gasstrom-Richtung (7) nach mindestens einer Hochspannungs-Elektrodenanordnung (31) der Ionisator-Einheit (3) angeordnet ist.

13. Abgassystem (5) nach Anspruch 12,
**dadurch gekennzeichnet, dass**
mindestens eine zwischen zwei freien Enden (33) mindestens einer positiven Hochspannungs-Elektrode (32a) und mindestens einer negativen Hochspannungs-Elektrode (32b) ausgebildete Verbindungslinie (34) senkrecht zur Gasstrom-Richtung (7) angeordnet ist.

14. Verwendung eines Sensorsystems (1) nach einem der Ansprüche 1 bis 11 in einem Abgassystem (5) eines Fahrzeugs, wobei zur Detektion von Partikeln, insbesondere von Rußpartikeln, in einem Gasstrom des Abgassystems (5) ungeladene Partikel mittels der Ionisator-Einheit (3) ionisiert werden, wobei geladene Partikel anschließend von der Sensor-Einheit (2) detektiert werden.

15. Verwendung eines Sensorsystems (1) nach Anspruch 14,
**dadurch gekennzeichnet, dass**
zwischen der mindestens einen positiven Hochspannungs-Elektrode (32a) und der mindestens einen negativen Hochspannungs-Elektrode (32b) eine Hochspannung gelegt ist, die mindestens 50 Volt beträgt.
